# EUROPEAN PATENT SPECIFICATION

(11) **EP 4 491 892 B1**
(45) Date of publication and mention of the grant of the patent: **17.06.2026**
(21) Application number: 24187500.4
(22) Date of filing: 09.07.2024
(51) Int. Cl.: F16B 25/00, F16B 25/10

(54) **THREADED FASTENERS**
BEFESTIGUNGSELEMENTE MIT GEWINDE
FIXATIONS FILETÉES

(30) Priority: 14.07.2023 US 202363513629 P; 01.07.2024 US 202418760188
(43) Date of publication of application: 15.01.2025
(73) Proprietor: Illinois Tool Works Inc., Glenview IL 60025 (US)
(72) Inventor: GABLE, Clayton, Glenview, 60025 (US); VERSINO, Anthony, Glenview, 60025 (US)
(74) Representative: HGF

(56) References cited:
- US-A1- 2018 209 465
- US-A1- 2023 067 592

## Description

### PRIORITY CLAIM

This application claims priority to and the benefit of U.S. Patent Application No. 63/513,629, filed July 14, 2023.

### CROSS-REFENCE TO RELATED APPLICATION

This application is related to the following commonly owned copending patent application: U.S. Design Patent Application No, 29/879,919, entitled "THREADED FASTENER," Attorney Docket No. 025140-2255.

### BACKGROUND

The present disclosure relates to threaded fasteners. Threaded fasteners are widely commercially used throughout the world for securing various objects to various substrates. Various threaded fasteners include a head, a shank, and one or more thread formations extending from the shank for frictionally engaging the substrate into which the threaded fastener is driven. Prior patent document US2023067592A1 describes a multipurpose screw.

Various threaded fasteners are used to secure objects to concrete, masonry, and other cementitious substrates. When the threaded fastener is rotated in a tightening direction, the threads of the thread formation(s) of the threaded fastener grip the inside surfaces of the substrate that define the cavity (such as the surfaces that define a pre-drilled hole in the substrate), causing the threaded fastener to be driven deeper into the substrate until the head of the threaded fastener comes into contact with the object being connected by the threaded fastener to the substrate (such as a bracket, flange, clip, or other mechanical device having a hole in it through which the shank of the fastener passes). In certain situations, a threaded fastener can experience frictional resistance forces that tend to impede the driving of the threaded fastener into the substrate. This can impart significant torsional stresses on the threaded fastener, placing the shank of the threaded fastener under shearing torsional stresses. These torsional stresses can be so great in certain circumstances such that they cause the threaded fastener to fail due to the forces placed on the shank of the threaded fastener. Certain failures can result in the shank breaking and the fastener having to be removed. These failures can occur in various sections of the shank.

Accordingly, there is a continuing need to provide threaded fasteners that reduce the likelihood of such failures.

### SUMMARY

Various embodiments of the present disclosure provide a threaded fastener drivable into a substrate that reduces the likelihood that the threaded fastener will fail due to the forces placed on the shank of the threaded fastener. In various embodiments of the present disclosure, the fastener includes a head and a shank connected to the head at a first end of the shank. The shank includes a first portion, a second portion, a third portion, and a tip at an end of the shank opposite the head. The fastener includes a first helical thread formation extending outwardly from the second and third portions of the shank. The fastener includes a second helical thread formation extending outwardly from a section of the third portion of the shank that is adjacent to the tip. The first helical thread formation defines grooves in the section of the third portion of the shank that is adjacent to the tip. This configuration of components enables more of the material of the fastener to be employed for the formation of the shank, which enables the sections of the shank to have larger diameters, and which results in an overall stronger shank that thus reduces the likelihood of failures occurring in the various sections of the shank.

The subject-matter of the invention is set out in the independent claim 1.

Other objects, features, and advantages of the present disclosure will be apparent from the following detailed disclosure, taken in conjunction with the accompanying sheets of drawings, wherein like reference numerals refer to like parts.

### BRIEF DESCRIPTION OF THE FIGURES

Figure 1 is a first side perspective view of a threaded fastener of one example embodiment of the present disclosure.
Figure 2 is another first side perspective view of the threaded fastener of Figure 1.
Figure 3 is a second side perspective view of the threaded fastener of Figure 1.
Figure 4 is a third side perspective view of the threaded fastener of Figure 1.
Figure 5 is a fourth side perspective view of the threaded fastener of Figure 1.
Figure 6 is a top end view of the threaded fastener of Figure 1.
Figure 7 is a bottom end view of the threaded fastener of Figure 1.
Figure 8 is an enlarged fragmentary perspective view of a part of the threaded fastener of Figure 1.
Figure 9 is another enlarged fragmentary perspective view of a part of the threaded fastener of Figure 1.
Figure 10 is a further enlarged fragmentary perspective view of a part of the threaded fastener of Figure 1.
Figure 11 is a further enlarged fragmentary perspective view of a part of the threaded fastener of Figure 1.
Figure 12 is a further enlarged fragmentary perspective view of a part of the threaded fastener of Figure 1.
Figure 13 is an enlarged fragmentary sectional view of part of one of the threads of one example embodiment of a threaded fastener in accordance with the present disclosure.
Figure 14 is an enlarged fragmentary sectional view of part of one of the threads of another example embodiment of a threaded fastener in accordance with the present disclosure.

### DETAILED DESCRIPTION

While the systems, devices, and methods described herein may be embodied in various forms, the drawings show, and the specification describes certain exemplary and non-limiting embodiments. Not all components shown in the drawings and described in the specification may be required, and certain implementations may include additional, different, or fewer components. Variations in the arrangement and type of the components; the shapes, sizes, and materials of the components; and the manners of connections of the components may be made without departing from the scope of the claims. Unless otherwise indicated, any directions referred to in the specification reflect the orientations of the components shown in the corresponding drawings and do not limit the scope of the present disclosure. Further, terms that refer to mounting methods, such as mounted, connected, etc., are not intended to be limited to direct mounting methods but should be interpreted broadly to include indirect and operably mounted, connected, and like mounting methods. This specification is intended to be taken as a whole and interpreted in accordance with the principles of the present disclosure and as understood by one of ordinary skill in the art.

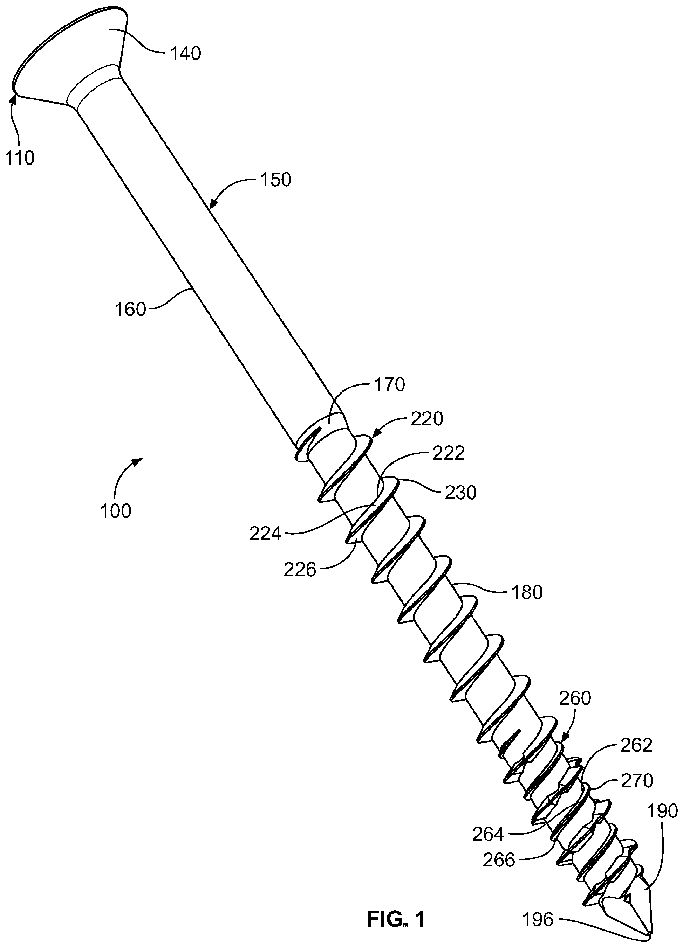

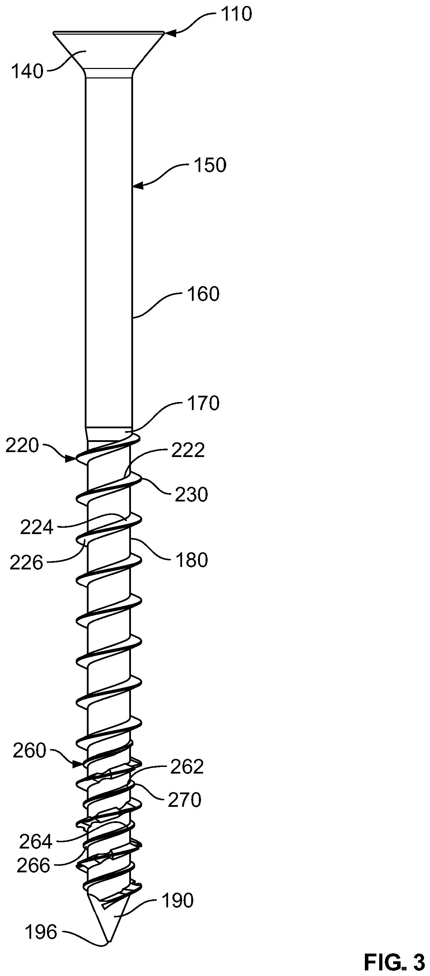

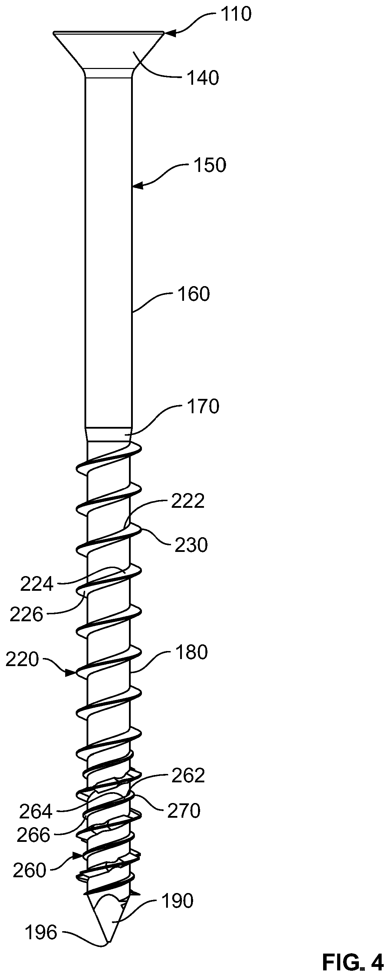

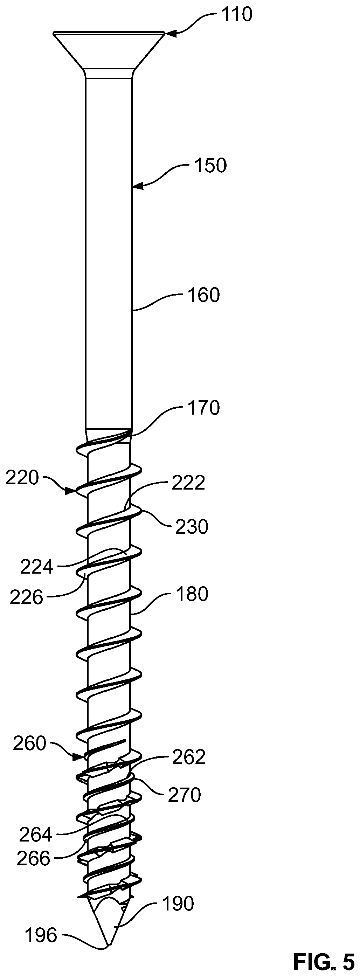

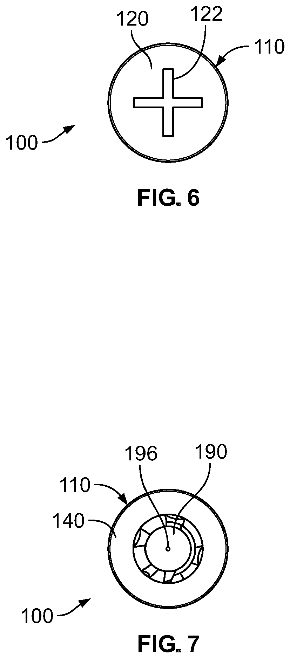

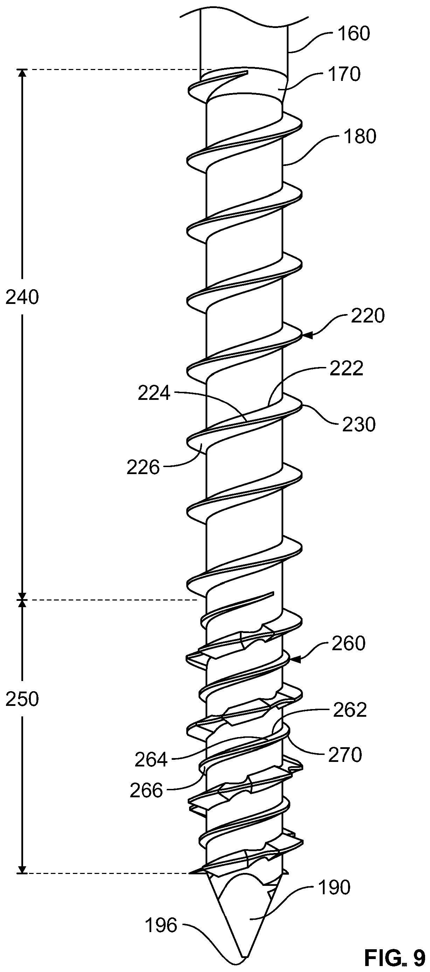

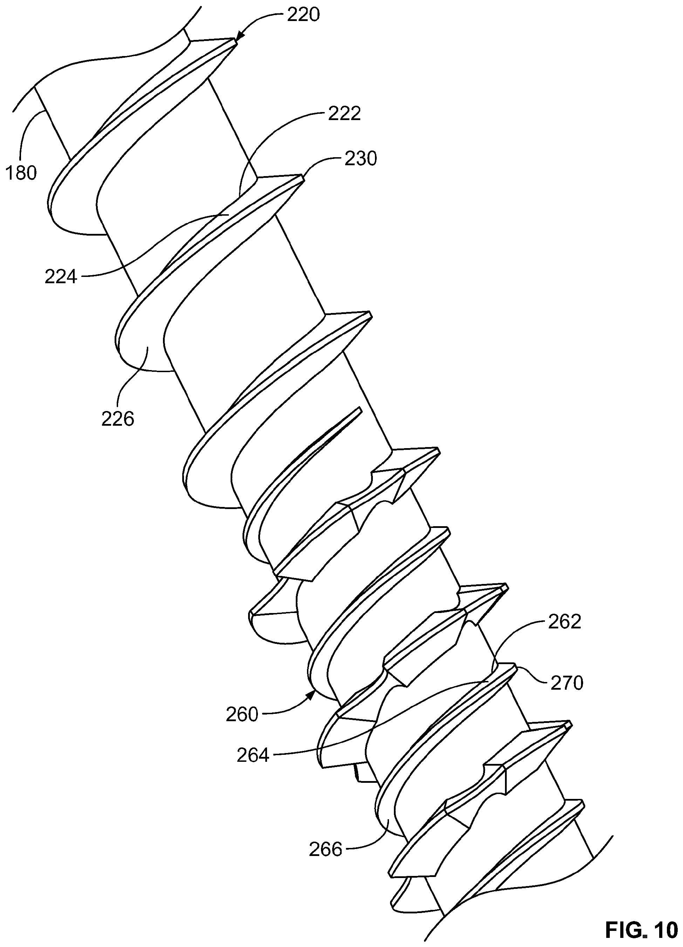

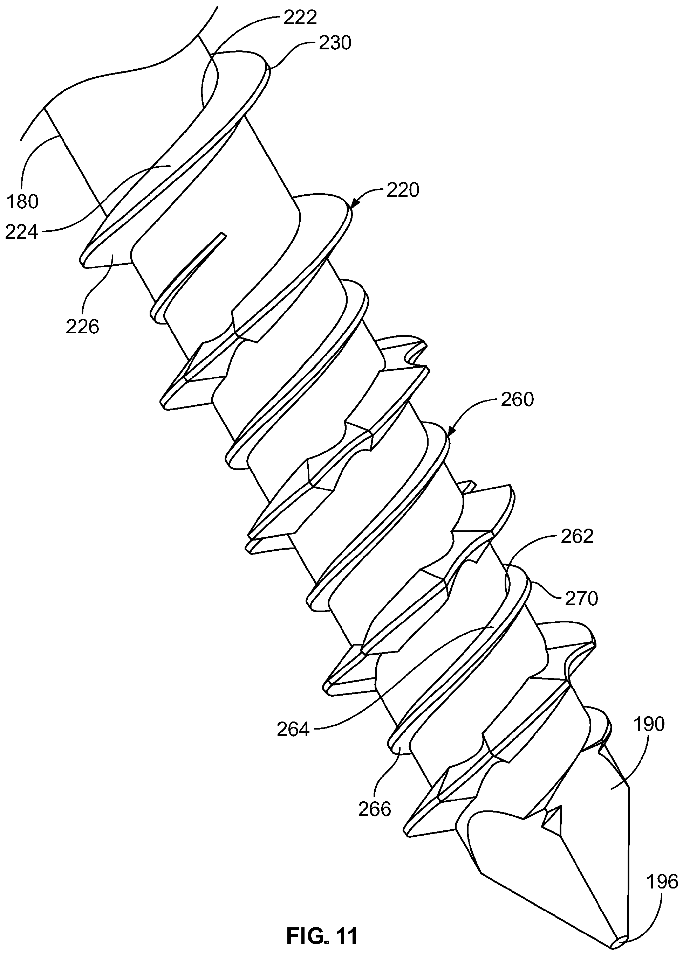

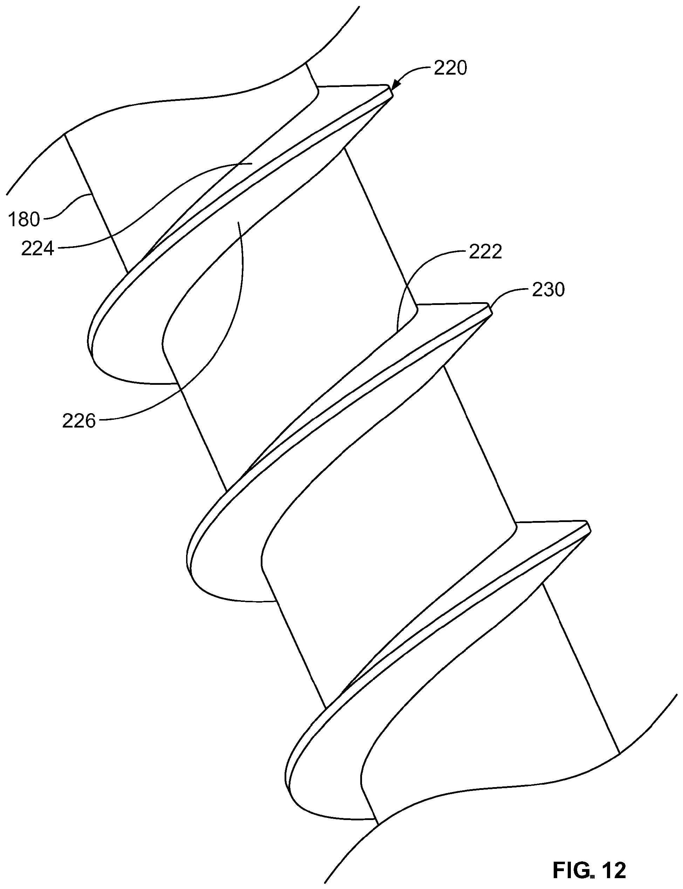

Referring now to the Figures, a threaded fastener 100 of one example embodiment of the present disclosure is shown in Figs. 1, 2, 3, 4, 5, 6, 7, 8, 9, 10, 11, and 12. The threaded fastener 100 may sometimes be referred to herein as the "fastener" for brevity. The fastener 100 is configured for use to secure an object to a substrate (such as but not limited to a concrete, masonry, and other cementitious substrate).

The threaded fastener 100 includes a head 110, a shank 150 connected to the head 110, and thread formations 220 and 260 connected to and extending outwardly from the shank 150. The head 110, the shank 150, and the thread formations 220 and 260 are monolithically formed from a metal material such as steel. In certain example embodiments, the steel is an AISI 1022 low carbon steel. The configuration of the threaded fastener 100 of the present disclosure maximizes the material used for the formation of the shank 150 while still providing the head 110 and the thread formations 220 and 260 that provide their desired functionality for the fastener 100. In other words, the present disclosure takes into account that for the formation of fastener, only a limited amount of material (such as steel) can be used to create the fastener, and specifically that during the formation process, only that limited amount of material can be used to form the head, the shank, and the thread formation(s) of the fastener. Thus, there is a trade off in the relative sizes and strengths of these components. For example, if a manufacturer wants a fastener that has four thread formations on the shank, the material for those four thread formations needs to come from the head or the shank, and thus the shank may need to be narrower. The present disclosure provides for a configuration of the fastener 100 including its head 110, its shank 150, and its thread formations 220 and 260 that provide the desired functionalities needed from the head 110 and the thread formations 220 and 260 while still maximizing the diameter and strength of the shank 150.

The head 110 includes a top portion 120 spaced from the shank 150 and a bottom portion 140 proximate the shank 150. The top portion 120 of the head 110 defines a mechanical engaging structure 122 that is engageable by an appropriate tool (not shown) for driving the fastener 100. In this example embodiment, the mechanical engaging structure 122 includes defines a cross-shaped slot configured to receive a tool such as a Phillips head screwdriver. In other embodiments, the mechanical engaging structure defines a straight slot configured to receive a flathead screwdriver. In other embodiments, the mechanical engaging structure defines a hexagonal shaped cavity configured to receive an Allen wrench. In other embodiments, the mechanical engaging structure includes a hexagonal shaped bolt head engageable by an appropriate tool such as a socket or wrench. Any known or subsequently developed suitable mechanical engaging structure can be used as the engaging structure of the fastener 100 in accordance with the present disclosure. The bottom portion 140 of the head 110 includes a bottom surface (not separately labeled). The bottom surface generally faces away from the head 110 and towards the shank 150. The bottom portion 140 can include a plurality of ribs (not shown) extending from the bottom surface. In various such embodiments, the ribs can be arranged radially around a central axis A1 of the fastener 100 and thus the head 110 (which would extend through line A1-A1). The head 110 can be alternatively configured in accordance with the present disclosure.

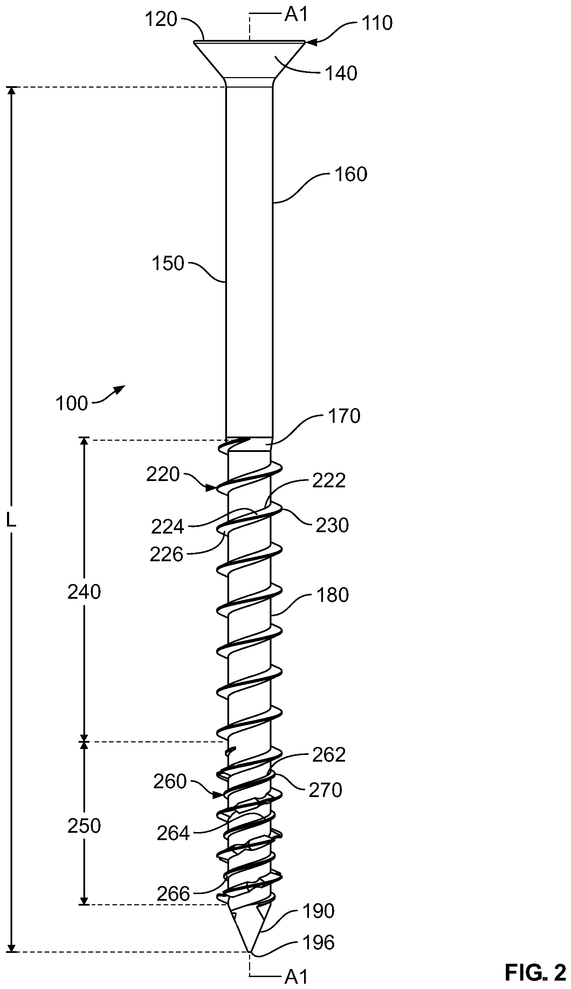

The shank 150 includes a first shank portion 160, a second shank portion 170, a third shank portion 180, and a tip 190. The shank 150 including the first shank portion 160, the second shank portion 170, the third shank portion 180, and the tip 190 has a length L as shown in Figure 2.

The first shank portion 160 includes a first end (not labeled) connected to the head 110 (at a first end of the shank 150) and a second end (not labeled) connected to the second shank portion 170. The first shank portion 160 has a constant or substantially constant outer diameter along the length of the first shank portion 160. In this embodiment, no thread formations extend from the first shank portion 160.

The second shank portion 170 includes a first end (not labeled) connected to the first shank portion 160 and a second end (not labeled) connected to the third shank portion 180. The second portion 170 has a decreasing outer diameter from section thereof connected to the first shank portion 160 to section thereof connected to the third shank portion 180. In this embodiment, only part of the first thread formation 220 extends from the second shank portion 170, and none of the second thread formation 260 extends from the second shank portion 170.

The third shank portion 180 includes a first end (not labeled) connected to the second shank portion 170 and a second end (not labeled) connected to the tip 190. The tip 190 includes a first end (not labeled) connected to the third shank portion 180 and a pointed second end 196. The third shank portion 180 has a constant or substantially constant outer diameter along the length of the third shank portion 180. In this embodiment, part of the first thread formation 220 extends from the third shank portion 180, and the second thread formation 260 extends from the part of the third shank portion 180.

The tip 190 is pointed to aid in penetrating the substrate in which the fastener 100 is being driven. The tip 190 can be alternatively configured in accordance with the present disclosure. The tip 190 has a decreasing outer diameter from section thereof connected to the third shank portion 180 to the tip 196 thereof.

The shank 150 has a longitudinal axis A1 extending along the length L of the shank 150 from the head 110 to the end of the pointed second end 196 of the tip 190.

In a first example embodiment that is a 3/16 inch fastener, the outer diameter of the first shank portion 160 is 0.148 inches (3.7592 mm) and the outer diameter of the third shank portion 180 is 0.133 inches (3.3528 mm).

In a second example embodiment that is a ¼ inch fastener, the outer diameter of the first shank portion 160 is 0.189 inches (4.8006 mm) and the outer diameter of the third shank portion 180 is 0.173 inches (4.3942 mm).

The fastener 100 includes a first helical thread formation 220 connected to, extending along, and extending outwardly from the second portion 170 of the shank 150 and from the third portion 180 of the shank 150. The first helical thread formation 220 includes a plurality of threads (not individually labeled) that span all or substantially all of the second and third portions 170 and 180 of the shank 150.

The first helical thread formation 220 extends along the second and third portions 170 and 180 of the shank 150 in a helical or spiral formation in the direction of the longitudinal axis A1 of the fastener 100.

The first helical thread formation 220 includes a root 222 adjacent the outer surfaces (not labeled) of the second and third portions 170 and 180 of the shank 150.

The first helical thread formation 220 includes a crest 230 opposite the root 222 and spaced from the outer surfaces (not labeled) of the second and third portions 170 and 180 of the shank 150.

The first helical thread formation 220 includes a trailing surface 224 extending from the root 222 to the crest 230 (at a 110 degree angle or approximately a 110 degree angle relative to the outer surface of the third portion 180 of the shank 150 in this example embodiment).

The first helical thread formation 220 includes a leading surface 226 extending from the root 222 to the crest 230 (at a 110 degree angle or approximately a 110 degree angle relative to the outer surface of the third portion 180 of the shank 150 in this example embodiment).

The leading surface 224 and the trailing surface 226 intersect at the crest 230 (at a 40 degree or approximately a 40 degree angle in this example embodiment). The crest can have a sharp edge or a somewhat flattened edge in various different embodiments. In this example embodiment, the leading surface 224 and the trailing surface 226 thus define a 40 degree or approximately a 40 degree angle thread angle of the first helical thread formation 220.

These angles are applicable to both the example 3/16 inch and ¼ inch fasteners described herein.

In this example configuration, less material needs to be used to form the first helical thread formation 220 due to these relatively smaller angles (when compared to various commercially available fasteners). In this example configuration for the fastener 100, the material that could be used for the first helical thread formation 220 to make these angles larger is rather used for increasing the outer diameter of the shank 150 and thus making the shank 150 stronger.

In a first example embodiment that is a 3/16 inch fastener, the first helical thread formation 220 has a 0.129 inch (3.2766 mm) pitch length.

In a second example embodiment that is a ¼ inch fastener, the first helical thread formation 220 has a 0.133 inch (3.3782 mm) pitch length.

In a first example embodiment that is a 3/16 inch fastener, the first helical thread formation 220 has an outer 0.208 inch (5.2832 mm) diameter.

In a second example embodiment that is a ¼ inch fastener, the first helical thread formation 220 has an outer 0.250 inch (6.35 mm) diameter.

The outer diameter of the first helical thread formation 220 is substantially constant along the length of the second portion 170 and the third portion 180 of the shank 150 (except for the leading and terminating sections thereof that are downwardly tapered toward the shank 150).

As best shown in Figures 2, 8 and 9, the first helical thread formation 220 includes a first thread portion 240 and a second thread portion 250.

In this example embodiment, the second thread portion 250 extends for the bottom three pitch lengths of the first helical thread formation 220 that are adjacent the tip 190.

The first thread portion 240 extends for the rest of the pitch lengths of the first helical thread formation 220.

The first thread portion 240 of the first helical thread formation 220 does not define any include any grooves. This reduces the torsional forces on this second portion 170 of shank 150 and on the upper section of the third portion 180 of the shank 150.

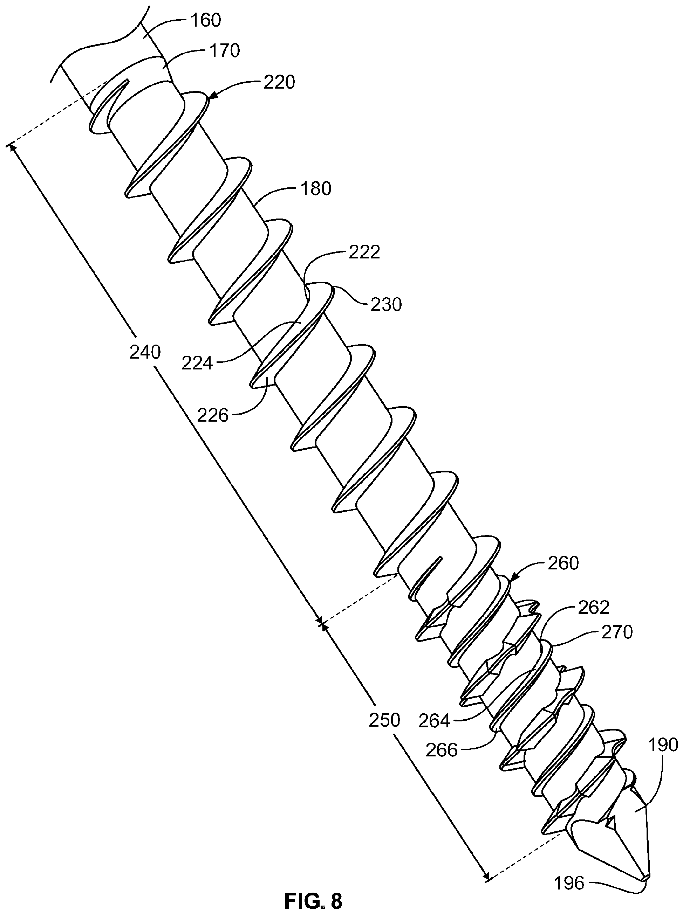

The second thread portion 250 of the first helical thread formation 220 defines a plurality of spaced-apart grooves. As best shown in Figures 8, 9, 10, and 11, in this example embodiment, the grooves are each partially defined by a first cutting surface (not labeled) and a second cutting surface (not labeled). It should be appreciated that the surfaces that define each groove can vary in accordance with the present disclosure. It should be appreciated that all of the grooves are identically configured in this example embodiment, but that one or more of the grooves may be alternatively configured.

The fastener 100 also includes a second helical thread formation 260 connected to, extending along, and extending outwardly from a lower section of the third portion 180 of the shank 150 adjacent the tip 190. The second helical thread formation 260 includes a plurality of threads (not individually labeled) that extend along a lower section of the third portion 170 of the shank 150 in a helical or spiral formation in the direction of the longitudinal axis A1 of the fastener 100.

The second helical thread formation 260 only spans the section of the third portion 180 of the shank 150 that is adjacent to the tip 190. In this embodiment, the second helical thread formation 260 spans the same section or substantially the same section as the second thread portion 250 of the first helical thread formation 220. In this example configuration, less material needs to be used to form the second helical thread formation 260 due to its relatively short length. In this example configuration for the fastener 100, the material that could be used for the second helical thread formation 260 to span the second and third sections 170 and 180 of the shank 150 is rather used for increasing the outer diameter of the shank 150 and thus making the shank 150 stronger.

The threads of the second helical thread formation 260 are positioned between the threads of the first helical thread formation 220.

The second helical thread formation 260 includes a root 262 adjacent the outer surface of the third portion 180 of the shank 150.

The second helical thread formation 260 includes a crest 270 opposite the root 262 and spaced from the outer surface of the third portion 180 of the shank 150.

The second helical thread formation 260 includes a trailing surface 264 extending from the root 262 to the crest 270 (at a 110 degree angle or an approximately 110 degree angle relative to the outer surface of the third portion 180 of the shank 150 in this example embodiment).

The second helical thread formation 260 includes a leading surface 266 extending from the root 262 to the crest 230 (at a 110 degree angle or an approximately 110 degree angle relative to the outer surface of the third portion 180 of the shank 150 in this example embodiment).

The leading surface 266 and the trailing surface 264 intersect at the crest 270 (at a 40 degree angle or an approximately 40 degree angle in this example embodiment). The crest can have a sharp edge or a somewhat flattened edge in various different embodiments. The leading surface 266 and the trailing surface 264 thus define a 40 degree or approximately 40 degree thread angle of the second helical thread formation 260 in this example embodiment.

These angles are applicable to both the example 3/16 inch and ¼ inch fasteners described herein.

In a first example embodiment that is a 3/16 inch fastener, the second helical thread formation 260 has a 0.129 inch (3.2766 mm) pitch length.

In a second example embodiment that is a ¼ inch fastener, the second helical thread formation 260 has a 0.133 inch (3.3782 mm) pitch length.

In a first example embodiment that is a 3/16 inch fastener, the second helical thread formation 260 has an outer 0.150 inch (3.81 mm) diameter.

In a second example embodiment that is a ¼ inch fastener, the second helical thread formation 260 has an outer 0.200 inch (5.08 mm) diameter.

The outer diameter of the second helical thread formation 260 is substantially constant along the length of the third portion 180 of the shank 150 (except for the leading and terminating sections thereof which are downwardly tapered).

The second helical thread formation 260 does not defines any grooves in this example embodiment.

In this example configuration, less material needs to be used to form the second helical thread formation 260 due to these relatively smaller angles. In this example configuration for the fastener 100, the material that could be used for the second helical thread formation 260 to make these angles larger is rather used for increasing the outer diameter of the shank 150 and thus making the shank 150 stronger.

In this example embodiment, the fastener 100 does not include any other helical thread formations connected to, extending along, and extending outwardly from shank.

Thus, in this example embodiment, the fastener 100 includes a head 110 and a shank 150 connected to the head 110 at a first end of the shank 150. The shank 150 includes a first portion 160, a second portion 170, a third portion 180, and a tip 190 at an end of the shank 150 opposite the head 110. The fastener 100 includes a first helical thread formation 220 extending outwardly from the second and third portions 170 and 180 of the shank 150. The fastener 110 includes a second helical thread formation 260 extending outwardly from a section of the third portion 180 of the shank 150 that is adjacent to the tip 190. The first helical thread formation 220 defines grooves in the section of the third portion 180 of the shank 150 that is adjacent to the tip 190. This configuration enables material that would otherwise be used for a second thread formation that extends the entire length of the first thread formation to be used for making the shank 150 have a relatively larger diameter and thus making the shank 150 stronger.

This configuration of the threaded fastener 100 provides significant advantages in increasing the torsion strength of the fastener, and particularly of the shank 150, and thus reducing the likelihood of failure of the shank 150 and undesirable failures of the fastener 100.

It should be appreciated that the fastener 100 is a right-handed threaded fastener, such that when it is turned in a clockwise fashion about axis A1 (when looking at the top portion 120 of the head 110), the fastener 100 is tightened or driven, and when turned in a counter-clockwise fashion about axis A1 (when looking at the top portion 120 of the head 110), the fastener 100 is loosened or backed out. It should be appreciated that the fastener could be formed as a left-handed threaded fastener, with the parts reversed.

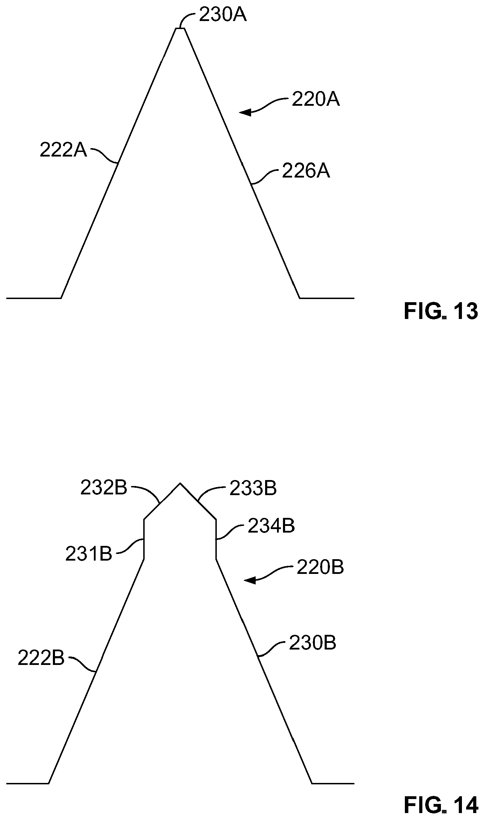

Figure 13 shows a sectional view of part of one of the threads of one example embodiment of a threaded fastener in accordance with the present disclosure. In this example embodiment, Figure 13 shows the cross-section of the relatively larger thread of the threaded fastener described above.

In this example, the first helical thread formation 220A includes a crest 230A opposite the root and spaced from the outer surfaces (not labeled) of the shank (not labeled).

The first helical thread formation 220A includes a trailing surface 224A extending from the root to the crest 230A (at a 110 degree angle or approximately a 110 degree angle relative to the outer surface of the shank in this example embodiment).

The first helical thread formation 220A includes a leading surface 226A extending from the root to the crest 230A (at a 110 degree angle or approximately a 110 degree angle relative to the outer surface of the shank in this example embodiment).

The leading surface 224A and the trailing surface 226A intersect at the crest 230a (at a 40 degree or approximately a 40 degree angle in this example embodiment). The crest can have a sharp edge or a somewhat flattened edge (such as shown) in various different embodiments. In this example embodiment, the leading surface 224A and the trailing surface 226A thus define a 40 degree or approximately a 40 degree angle thread angle of the first helical thread formation 220A.

Figure 14 shows a sectional view of part of one of the threads of another example embodiments of a threaded fastener in accordance with the present disclosure. In this example embodiment, Figure 14 shows the cross-section of the relatively larger thread of the threaded fastener described above. In this embodiment, the leading and trailing surfaces have alternative sections.

In this example, the first helical thread formation 220B includes a crest (not labeled) opposite the root and spaced from the outer surfaces (not labeled) of the shank (not labeled).

The first helical thread formation 220B includes a trailing surface having a first section 222B, a second section 231B connected to the first section 222B, and a third section 232B connected to the second section 231B.

The first section 222B extends from the root toward the crest (at a 110 degree angle or approximately a 110 degree angle relative to the outer surface of the shank in this example embodiment).

The second section 231B extends from the first section 222B toward the crest (at a 160 degree angle or approximately a 160 degree angle in this example embodiment).

The third section 232B extends from the second section 231B toward the crest (at a 135 degree angle or approximately a 135 degree angle in this example embodiment).

The first helical thread formation 220B includes a leading surface having a first section 230B, a second section 234B connected to the first section 230B, and a third section 233B connected to the second section 234B.

The first section 230B extends from the root toward the crest (at a 110 degree angle or approximately a 110 degree angle relative to the outer surface of the shank in this example embodiment).

The second section 234B extends from the first section 230B toward the crest (at a 160 degree angle or approximately a 160 degree angle in this example embodiment).

The third section 233B extends from the second section 234B toward the crest (at a 135 degree angle or approximately a 135 degree angle in this example embodiment).

The third section 233B of the leading surface and the third section 232B of the trailing surface intersect at the crest (at a 90 degree or approximately a 90 degree angle in this example embodiment). The crest can have a sharp edge (such as shown) or a somewhat flattened edge in various different embodiments.

Generally, for fasteners, there is a trade off for sharp triangular thread cross section between thread angle and root diameter. In other words, as the material in the thread of the fastener is increased to maximize the holding power of the fastener (such as an increase in thread angle to 40 degrees, 50 degrees, or 60 degree), the material is taken from the root diameter, which can reduce torsional strength.

This above described and illustrated example embodiment thread configuration optimizes material allocation to both the root diameter of the thread geometry and the tip of the thread geometry. This illustrated example embodiment employs an optimal amount of material in the tip of the thread while maintaining holding power and while keeping torsional strength at an optimal level. This illustrated embodiment also helps to reduce wear while cutting threads in a substrate. By moving material in this configuration to the tip of the thread, this configuration resists wear during the thread tapping operation (such as when using the self-tapping fastener in substrates like concrete).

It will be understood that modifications and variations may be affected without departing from the scope of the novel concepts of the present invention, and it is understood that this application is to be limited only by the scope of the claims.

## Claims

1. A fastener (100) comprising:
a head (110);
a shank (150) connected to and extending from the head, the shank including:
a first portion (160),
a second portion (170) connected to and extending from the first portion,
a third portion (180) connected to and extending from the second portion, and
a tip (190) connected to and extending from the third portion and at an end of the shank opposite the head;
a first helical thread formation (220) extending outwardly from the second and third portions of the shank,
the first helical thread formation having a first thread portion (240) and a second thread portion (250),
the first thread portion of the first helical thread formation extending from the second portion of the shank,
the first thread portion of the first helical thread formation extending from the third portion of the shank,
the second thread portion of the first helical thread formation extending from the third portion of the shank,
the second thread portion of the first helical thread formation defining grooves; and
a second helical thread formation (260) extending outwardly from the third portion of the shank,
wherein the first portion of the shank has a greater outer diameter than the third portion of the shank, and
wherein the second portion of the shank is tapered from the first portion of the shank to the third portion of the shank,
**characterized in that** the fastener (100) does not include any other helical thread formations connected to, extending along, and extending outwardly from the shank (150).

2. The fastener (100) of claim 1, wherein the first thread portion (240) of the first helical thread formation (220) does not define any grooves.

3. The fastener (100) of claim 2, wherein the second thread portion (250) of the first helical thread formation (220) defines grooves.

4. The fastener (100) of claim 3, wherein only part of the second thread portion (250) of the first helical thread formation (220) defines grooves.

5. The fastener (100) of claim 4, wherein the part of the second thread portion (250) of the first helical thread formation (220) that is adjacent to the tip (190) defines the grooves.

6. The fastener (100) of claim 5, wherein the second helical thread formation (260) does not extend from the second portion (170) of the shank (150).

7. The fastener (100) of claim 6, wherein the second helical thread formation (260) does not extend from part of the third portion (180) of the shank (150).

8. The fastener (100) of claim 6, wherein the second helical thread formation (260) does not extend from part of the third portion (180) of the shank (150) that is adjacent to the second portion (170) of the shank.

9. The fastener (100) of claim 1, wherein the second helical thread formation (260) does not extend from part of the third portion (180) of the shank (150).

10. The fastener (100) of claim 1, wherein the second helical thread formation (260) does not extend from part of the third portion (180) of the shank (150) that is adjacent to the second portion (170) of the shank.

11. The fastener (100) of claim 1, wherein the first thread portion (240) of the first helical thread formation (220) does not define any grooves,
wherein the second thread portion (250) of the first helical thread formation defines grooves,
wherein the second helical thread formation (260) does not extend from the second portion (170) of the shank (150), and
wherein the second helical thread formation does not extend from the third portion (180) of the shank.

12. The fastener (100) of claim 11, wherein a part of the second thread portion (250) of the first helical thread formation (220) that is adjacent to the tip (190) defines the grooves in the second thread portion of the first helical thread.

## Patentansprüche

1. Befestigungselement (100), aufweisend:
einen Kopf (110);
einen Schaft (150), der mit dem Kopf verbunden ist und sich von diesem weg erstreckt, wobei der Schaft Folgendes beinhaltet:
einen ersten Abschnitt (160),
einen zweiten Abschnitt (170), der mit dem ersten Abschnitt verbunden ist und sich von diesem weg erstreckt,
einen dritten Abschnitt (180), der mit dem zweiten Abschnitt verbunden ist und sich von diesem weg erstreckt, und
eine Spitze (190), die mit dem dritten Abschnitt verbunden ist und sich von diesem weg erstreckt und an einem Ende des Schafts gegenüber dem Kopf verbunden ist;
eine schraubenförmige Gewindeformation (220), die sich von dem zweiten und dritten Abschnitt des Schafts nach außen erstreckt,
wobei die erste schraubenförmige Gewindeformation einen ersten Gewindeabschnitt (240) und einen zweiten Gewindeabschnitt (250) aufweist,
wobei sich der erste Gewindeabschnitt der ersten schraubenförmigen Gewindeformation von dem zweiten Abschnitt des Schafts erstreckt,
wobei sich der erste Gewindeabschnitt der ersten schraubenförmigen Gewindeformation von dem dritten Abschnitt des Schafts weg erstreckt,
wobei sich der zweite Gewindeabschnitt der ersten schraubenförmigen Gewindeformation von dem dritten Abschnitt des Schafts weg erstreckt,
wobei der zweite Gewindeabschnitt der ersten schraubenförmigen Gewindeformation Nuten definiert; und
wobei sich eine zweite schraubenförmige Gewindeformation (260) von dem dritten Abschnitt des Schafts nach außen erstreckt,
wobei der erste Abschnitt des Schafts einen größeren Außendurchmesser als der dritte Abschnitt des Schafts aufweist, und
wobei der zweite Abschnitt des Schafts von dem ersten Abschnitt des Schafts zu dem dritten Abschnitt des Schafts hin verjüngt ist,
**dadurch gekennzeichnet, dass** das Befestigungselement (100) keine anderen schraubenförmigen Gewindeformationen beinhaltet, die mit dem Schaft (150) verbunden sind, sich entlang desselben erstrecken und sich von diesem nach außen erstrecken.

2. Befestigungselement (100) nach Anspruch 1, wobei der erste Gewindeabschnitt (240) der ersten schraubenförmigen Gewindeformation (220) keine Nuten definiert.

3. Befestigungselement (100) nach Anspruch 2, wobei der zweite Gewindeabschnitt (250) der ersten schraubenförmigen Gewindeformation (220) Nuten definiert.

4. Befestigungselement (100) nach Anspruch 3, wobei nur ein Teil des zweiten Gewindeabschnitts (250) der ersten schraubenförmigen Gewindeformation (220) Nuten definiert.

5. Befestigungselement (100) nach Anspruch 4, wobei der Teil des zweiten Gewindeabschnitts (250) der ersten schraubenförmigen Gewindeformation (220), der an die Spitze (190) angrenzt, die Nuten definiert.

6. Befestigungselement (100) nach Anspruch 5, wobei sich die zweite schraubenförmige Gewindeformation (260) nicht von dem zweiten Abschnitt (170) des Schafts (150) weg erstreckt.

7. Befestigungselement (100) nach Anspruch 6, wobei sich die zweite schraubenförmige Gewindeformation (260) nicht von einem Teil des dritten Abschnitts (180) des Schafts (150) weg erstreckt.

8. Befestigungselement (100) nach Anspruch 6, wobei sich die zweite schraubenförmige Gewindeformation (260) nicht von einem Teil des dritten Abschnitts (180) des Schafts (150), der an den zweiten Abschnitt (170) des Schafts angrenzt, weg erstreckt.

9. Befestigungselement (100) nach Anspruch 1, wobei sich die zweite schraubenförmige Gewindeformation (260) nicht von einem Teil des dritten Abschnitts (180) des Schafts (150) weg erstreckt.

10. Befestigungselement (100) nach Anspruch 1, wobei sich die zweite schraubenförmige Gewindeformation (260) nicht von einem Teil des dritten Abschnitts (180) des Schafts (150), der an den zweiten Abschnitt (170) des Schafts angrenzt, weg erstreckt.

11. Befestigungselement (100) nach Anspruch 1, wobei der erste Gewindeabschnitt (240) der ersten schraubenförmigen Gewindeformation (220) keine Nuten definiert,
wobei der zweite Gewindeabschnitt (250) der ersten schraubenförmigen Gewindeformation Nuten definiert,
wobei sich die zweite schraubenförmige Gewindeformation (260) nicht von dem zweiten Abschnitt (170) des Schafts (150) weg erstreckt, und
wobei sich die zweite schraubenförmige Gewindeformation nicht von dem dritten Abschnitt (180) des Schafts weg erstreckt.

12. Befestigungselement (100) nach Anspruch 11, wobei ein Teil des zweiten Gewindeabschnitts (250) der ersten schraubenförmigen Gewindeformation (220), der an die Spitze (190) angrenzt, die Nuten in dem zweiten Gewindeabschnitt des ersten schraubenförmigen Gewindes definiert.

## Revendications

1. Élément de fixation (100) comprenant :
une tête (110) ;
une tige (150) connectée à la tête et s'étendant depuis celle-ci, la tige comprenant :
une première partie (160),
une deuxième partie (170) connectée à la première partie et s'étendant depuis celle-ci,
une troisième partie (180) connectée à la deuxième partie et s'étendant depuis celle-ci, et
une pointe (190) connectée à la troisième partie et s'étendant depuis celle-ci et à une extrémité de la tige opposée à la tête ;
une première formation de filetage hélicoïdal (220) s'étendant vers l'extérieur depuis les deuxième et troisième parties de la tige,
la première formation de filet hélicoïdal ayant une première partie de filet (240) et une deuxième partie de filet (250),
la première partie de filet de la première formation de filet hélicoïdal s'étendant depuis la deuxième partie de la tige,
la première partie de filet de la première formation de filet hélicoïdal s'étendant depuis la troisième partie de la tige,
la deuxième partie de filet de la première formation de filet hélicoïdal s'étendant depuis la troisième partie de la tige,
la deuxième partie de filet de la première formation de filet hélicoïdal définissant des rainures ; et
une deuxième formation de filet hélicoïdal (260) s'étendant vers l'extérieur depuis la troisième partie de la tige,
dans lequel la première partie de la tige a un diamètre extérieur supérieur à la troisième partie de la tige, et
dans lequel la deuxième partie de la tige est effilée de la première partie de la tige à la troisième partie de la tige,
**caractérisé en ce que** l'élément de fixation (100) ne comprend aucune autre formation de filet hélicoïdal connectée à la tige (150), s'étendant le long de celle-ci et s'étendant vers l'extérieur depuis celle-ci.

2. Élément de fixation (100) selon la revendication 1, dans lequel la première partie de filet (240) de la première formation de filet hélicoïdal (220) ne définit aucune rainure.

3. Élément de fixation (100) selon la revendication 2, dans lequel la deuxième partie de filet (250) de la première formation de filet hélicoïdal (220) définit des rainures.

4. Élément de fixation (100) selon la revendication 3, dans lequel seulement une partie de la deuxième partie de filet (250) de la première formation de filet hélicoïdal (220) définit des rainures.

5. Élément de fixation (100) selon la revendication 4, dans lequel la partie de la deuxième partie de filet (250) de la première formation de filet hélicoïdal (220) qui est adjacente à la pointe (190) définit les rainures.

6. Élément de fixation (100) selon la revendication 5, dans lequel la deuxième formation de filet hélicoïdal (260) ne s'étend pas depuis la deuxième partie (170) de la tige (150).

7. Élément de fixation (100) selon la revendication 6, dans lequel la deuxième formation de filet hélicoïdal (260) ne s'étend pas depuis une partie de la troisième partie (180) de la tige (150).

8. Élément de fixation (100) selon la revendication 6, dans lequel la deuxième formation de filet hélicoïdal (260) ne s'étend pas à partir d'une partie de la troisième partie (180) de la tige (150) qui est adjacente à la deuxième partie (170) de la tige.

9. Élément de fixation (100) selon la revendication 1, dans lequel la deuxième formation de filet hélicoïdal (260) ne s'étend pas à partir d'une partie de la troisième partie (180) de la tige (150).

10. Élément de fixation (100) selon la revendication 1, dans lequel la deuxième formation de filet hélicoïdal (260) ne s'étend pas à partir d'une partie de la troisième partie (180) de la tige (150) qui est adjacente à la deuxième partie (170) de la tige.

11. Élément de fixation (100) selon la revendication 1, dans lequel la première partie de filet (240) de la première formation de filet hélicoïdal (220) ne définit aucune rainure,
dans lequel la deuxième partie de filet (250) de la première formation de filet hélicoïdal définit des rainures,
dans lequel la deuxième formation de filet hélicoïdal (260) ne s'étend pas à partir de la deuxième partie (170) de la tige (150), et
dans lequel la deuxième formation de filet hélicoïdal ne s'étend pas à partir de la troisième partie (180) de la tige.

12. Élément de fixation (100) selon la revendication 11, dans lequel une partie de la deuxième partie de filet (250) de la première formation de filet hélicoïdal (220) qui est adjacente à la pointe (190) définit les rainures dans la deuxième partie de filet du premier filet hélicoïdal.
